# EUROPEAN PATENT APPLICATION

(11) **EP 4 538 101 A1**
(43) Date of publication of application: **16.04.2025**
(21) Application number: 23203342.3
(22) Date of filing: 12.10.2023
(51) Int. Cl.: B60L 53/16, B60L 53/18, B60L 58/18, H01R 25/00

(54) **APPARATUS, METHOD AND SYSTEM FOR CHARGING MULTIPLE ELECTRIC VEHICLES**

(71) Applicant: Ford Global Technologies, LLC, Dearborn, MI 48126 (US)
(72) Inventor: GAO, Jianmin, Colchester, CO7 6BX (GB); ROUTLEDGE, John, William, London, SE12 8BJ (GB); ARMITAGE, Roland, Benfleet, SS7 2NU (GB); HARRIS, Timothy, Grosse Ile, 48138 (US); AVILA, Alexander, Birmingham, 48009 (US)
(74) Representative: Haley Guiliano International LLP

(57) **Abstract**

The present disclosure relates to an apparatus, method and a system for charging multiple electric vehicles. The apparatus comprises an input terminal, a first output terminal, a second output terminal and a switch. The input terminal is connectable to a power source. The first output terminal is connectable to an input terminal of a first electric vehicle. The second output terminal is connectable to an input terminal of a second electric vehicle. The switch controls an electric current through each of the first output terminal and the second output terminal based on one or more predefined logics for enabling the first and second electric vehicles to connect to the power source.

## Description

### Background

The present disclosure relates to an apparatus and method for concurrent power distribution to one or more power receivers. Particularly, but not exclusively, the present disclosure relates to an apparatus, a method, and a system for charging multiple electric vehicles.

### Summary

The demand for electric equipment compared to conventional mechanical equipment is gaining popularity due to its eco-friendly nature and affordable operating cost. A number of electric equipment have become a part of our daily life, such as smartphones and electric vehicles. Specifically, electric vehicles may be charged regularly via chargers at home or in public. However, the number of chargers is limited. As a result, electric vehicles can share chargers installed at home or public sites. However, sharing the chargers can increase charging time, and might worsen user experience. One approach is to install additional chargers to increase charging capacity. However, this approach can be expensive. A need, therefore, exists to provide an apparatus, a method and a system to overcome the above-mentioned problems.

An object of the present disclosure is to provide an apparatus, a method and a system for charging multiple electric vehicles using a single power source.

Another object of the present disclosure is to provide an apparatus, a method and a system for charging multiple electric vehicles simultaneously to improve the user experience.

Another object of the present disclosure is to provide an apparatus, a method, and a system for charging multiple electric vehicles simultaneously using a bidirectional power transfer (BPT) mode.

Another object of the present disclosure is to provide an apparatus, a method and a system for charging multiple electric vehicles without additional cables or connectors, hence, decreasing overall cost.

According to the apparatus, method, and system described herein, there is provided an apparatus for charging multiple electric vehicles. The apparatus comprises an input terminal, a first output terminal, a second output terminal and a switch. The first input terminal is connectable to a power source. A first output terminal is connectable to an input terminal of a first electric vehicle. A second output terminal is connectable to an input terminal of a second electric vehicle. The switch controls power transfer through each of the first output terminal and the second output terminal based on one or more predefined logics. For the avoidance of doubt, the term "power transfer" encompasses the flow of electric current for the purpose of charging and/or discharging a battery, e.g., an electric vehicle battery.

In some examples, the apparatus is a cable, a connector, or a combination thereof.

In some examples, the cable comprises a handle. The first and second output terminals are arranged on the handle.

In some examples, the apparatus comprises a cover arrangement to cover the first input terminal, the first output terminal, or the second output terminal. The cover arrangement prevents dirt and liquid penetration.

In some examples, the cover arrangement includes an automatic locking mechanism.

In some examples, the switch is communicatively coupled to a processing module for receiving one or more control signals based on the one or more predefined logics to control the charging.

In some examples, the one or more predefined logics is based on time, state of charge (SOC), state of health, priority, load, charging mode, or a combination thereof. The one or more predefined logics allows the automatic charging.

In some examples, the charging mode includes a bi-directional power transfer (BPT) mode.

According to the apparatus, method, and system described herein, there is provided a method for charging multiple electric vehicles. The method comprises the steps of a) determining a connection status of one or more electric vehicles with a power source; b) determining a current state of the one or more electric vehicles; c) processing one or more predefined logics to determine a target state of the one or more electric vehicles; d) comparing the target state with the current state of the one or more electric vehicles; and e) generating one or more control signals based on the comparison.

In some examples, generating the one or more control signals comprises transmitting the one or more control signals to a switch for controlling the charging.

In some examples, the current state includes state of charge (SOC), state of health, charging rate or a combination thereof.

In some examples, determining the connection status further comprises monitoring readiness of one or more electric vehicles.

In some examples, the method further comprises providing one or more feedback using one or more user interface modules based on the connection status, the current state, the target state, the one or more predefined logics or a combination thereof.

In some examples, determining the connection status comprises determining the connection status via at least one of a wired or wireless protocol.

According to the apparatus, method, and system described herein, there is provided a system that comprises a first electric vehicle, a second electric vehicle and an apparatus. The apparatus is configured to charge the first and second electric vehicles. The apparatus comprises an input terminal, a first output terminal, a second output terminal and a switch. The input terminal is connectable to a power source. The first output terminal is connectable to the input terminal of the first electric vehicle. The second output terminal is connectable to the input terminal of the second electric vehicle. The switch controls charging through the first output terminal and the second output terminal based on one or more predefined logics.

According to the apparatus, method, and system described herein, there is provided a system, which is configured to perform the method steps.

### Brief Description of the Drawings

The above and other objects and advantages of the disclosure will be apparent upon consideration of the following detailed description, taken in conjunction with the accompanying drawings, in which like reference characters refer to like parts throughout, and in which:
FIG. 1 illustrates an apparatus for charging multiple electric vehicles, in accordance with some examples of the present disclosure;
FIG. 1(A) illustrates an apparatus for charging multiple electric vehicles, in accordance with some examples of the present disclosure;
FIG. 2(A) illustrates a first configuration of an apparatus, in accordance with some examples of the present disclosure;
FIG. 2(B) illustrates a second configuration of an apparatus, in accordance with some examples of the present disclosure;
FIG. 2(C) illustrates a third configuration of an apparatus, in accordance with some examples of the present disclosure;
FIG. 2(D) illustrates a fourth configuration of an apparatus, in accordance with some examples of the present disclosure;
FIG. 3 illustrates a block diagram of a system, in accordance with some examples of the present disclosure;
FIG. 4 illustrates a block diagram of a system, in accordance with some examples of the present disclosure; and
FIG. 5 illustrates a flowchart of a method for charging multiple electric vehicles, in accordance with some examples of the present disclosure.

### Detailed Description

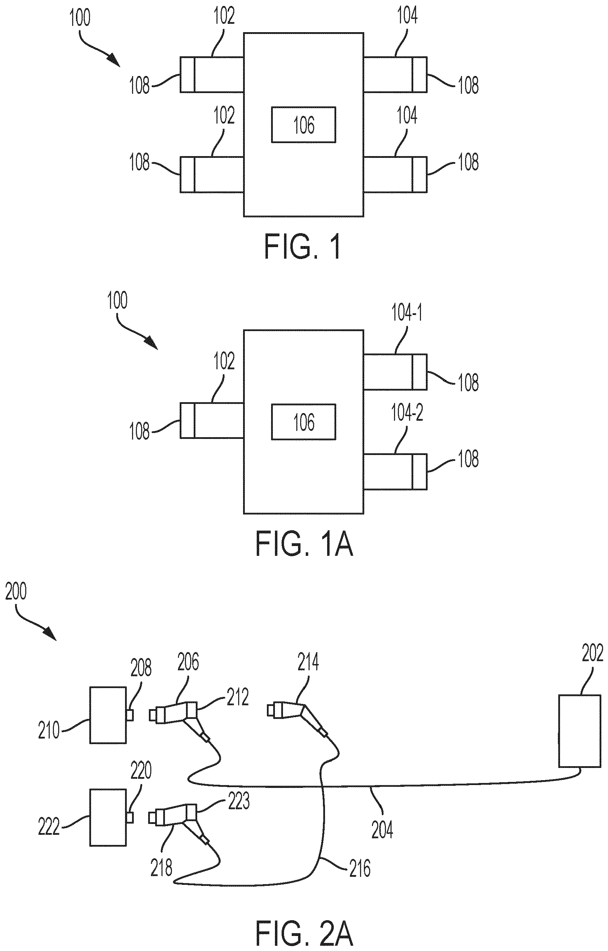

FIG. 1 illustrates an apparatus 100 for charging multiple electric vehicles. The apparatus 100 includes one or more input terminals 102, one or more output terminals 104, and a switch 106.

The one or more input terminals 102 receive input from one or more power sources. The one or more input terminals 102 may be directly connected to the one or more power sources. Alternatively, the one or more input terminals 102 may be connected to the one or more power sources through a cable, a plug, a socket, a connector, or a combination thereof. The cable has sufficient length to connect the one or more input terminals 102 to the one or more power sources.

The one or more output terminals 104 transfer the received input from the one or more power sources to one or more power receivers (not shown). The one or more output terminals 104 may be directly connected to the one or more power receivers. Alternatively, the one or more output terminals 104 may be connected to the one or more power receivers through a cable, a plug, a socket, a connector, or a combination thereof. The cable has sufficient length to connect the one or more output terminals 104 to the one or more power receivers. In the context of the present disclosure, the term "power receiver" is understood to mean any device capable of receiving, distributing and/or storing power. For example, a power receiver may be a power cell, a power cell control module (e.g., control circuitry and/or software), a capacitor, and/or any other appropriate type of electrical component configured to receive, distribute and/or store power in an electrical network. This understanding should be carried on through the below examples. For example, a power receiver may comprise a battery control module and/or a battery of an electric vehicle.

The input is a power signal. The one or more power sources may be a vehicle or a building.

In one example, the one or more input terminals 102 and the one or more output terminals 104 may be integrated into a single structure. The one or more input terminals 102 and the one or more output terminals 104 are cable, plug, socket, connector, or a combination thereof.

The terms the one or more input terminals 102 or the one or more output terminals 104 are interchangeable. For example, the interchanging of the terminal(s) can be realized in the case of bidirectional power transfer (BPT). The one or more input terminals 102 may act or serve as output terminals when multiple power receivers are sequentially connected. Similarly, the one or more output terminals 104 may act or serve as input terminals for the sequentially connected power receivers.

In a first example, a first power source is a vehicle charger, charging station, or a building, a first power receiver is a first electric vehicle, and a second power receiver is a second electric vehicle. Through the apparatus 100, the building is connected to both the first and second electric vehicles for simultaneous charging of the vehicles.

In a second example, a first power source is a building, and a first power receiver is a first vehicle. The building is connected to the first vehicle for charging. A second power receiver is a second vehicle connected to the first vehicle for charging. The first vehicle acts as a power source for the second vehicle.

In a third example, a first power source is a building, a first power receiver is a first vehicle, and a second power source is a second vehicle. The building is connected to the first vehicle for charging. The second vehicle is connected to the building to charge the building. The building can act as both the power source and the power receiver.

In a fourth example, a power source is a building, and one or more power receivers are vehicles. The building is connected to the one or more vehicles for charging the vehicles at a low tariff. The one or more vehicles act or serve as a power storage for the building.

The apparatus 100 may include a processing module and a memory module. The processing module is capable of executing software instructions or algorithms to implement functional aspects of the present disclosure. The processing module can be any commercially available processor or a cloud system. The processing module can also be implemented as a Digital Signal Processor (DSP), a controller, a microcontroller, a designated System on Chip (SoC), an integrated circuit implemented with a Field Programmable Gate Array (FPGA), an Application Specific Integrated Circuit (ASIC), or a combination thereof. The processing module can be implemented using a co-processor for complex computational tasks. The processing module may be a part of the one or more power sources, one or more power receivers, one or more input terminals 102 or one or more output terminals 104.

The memory module may include any of the volatile memory elements (for example, random access memory, such as DRAM, SRAM, SDRAM, etc.), non-volatile memory elements (for example, ROM, hard drive, etc.), other storage media or combinations thereof. The memory module may have a distributed architecture, where various components are situated remotely from one another but can be accessed using the processing module. The software in the memory module can include one or more software programs, and machine learning algorithms, each of which includes an ordered listing of executable instructions for implementing logical functions. Further, the processing module can be implemented using a cloud architecture.

The processing module executes one or more predefined logics stored in the memory module. Alternatively, the processing module is communicatively coupled to one or more user interface modules to receive user inputs to define one or more predefined logics. The processing module generates one or more control signals based on the one or more predefined logics. The one or more predefined logics is based on time, state of charge (SOC), state of health, priority, load, charging mode or a combination thereof. The apparatus 100 includes a bi-directional power transfer (BPT) mode. The bidirectional power transfer (BPT) mode enables the user to charge or discharge multiple power receivers simultaneously, as well as the chagrining of one power receiver and the discharging of another. The power apparatus 100 may also include other charging modes such as a fast-charging mode, and a slow-charging mode. The apparatus 100 may include a communication module responsible for enabling communication between the one or more power sources and the one or more power receivers. The one or more power sources utilize a protective earth (PE) (also known as a ground) to safely direct a fault current into the ground. The same protective earth is used for the one or more power receivers.

The apparatus 100 is a cable, a connector, or a combination thereof. The apparatus 100 may include an AC converter or a DC converter. Alternatively, the one or more power sources may include an AC converter or a DC converter.

The switch 106 is an electronic switch responsible for controlling the charging of the one or more power receivers. The switch 106 is communicatively coupled to the processing module for receiving the one or more control signals based on the one or more predefined logics. The one or more control signals control the charging of the one or more power receivers based on the one or more control signals. The switch 106 may be placed in between the one or more input terminals 102 and the one or more output terminals 104. Alternatively, the switch 106 may be a part of the one or more power sources, the one or more input terminals 102 or one or more output terminals 104. The switch 106 may comprise one or more sub-units for controlling the charging through the one or more output terminals 104. The switch 106 may include a current-limiting circuit to selectively limit the flow of the current through the one or more output terminals 104 in the apparatus 100. Alternatively, the switch 106 may be connected to the current-limiting circuit using at least one of a wired or wireless communication protocol.

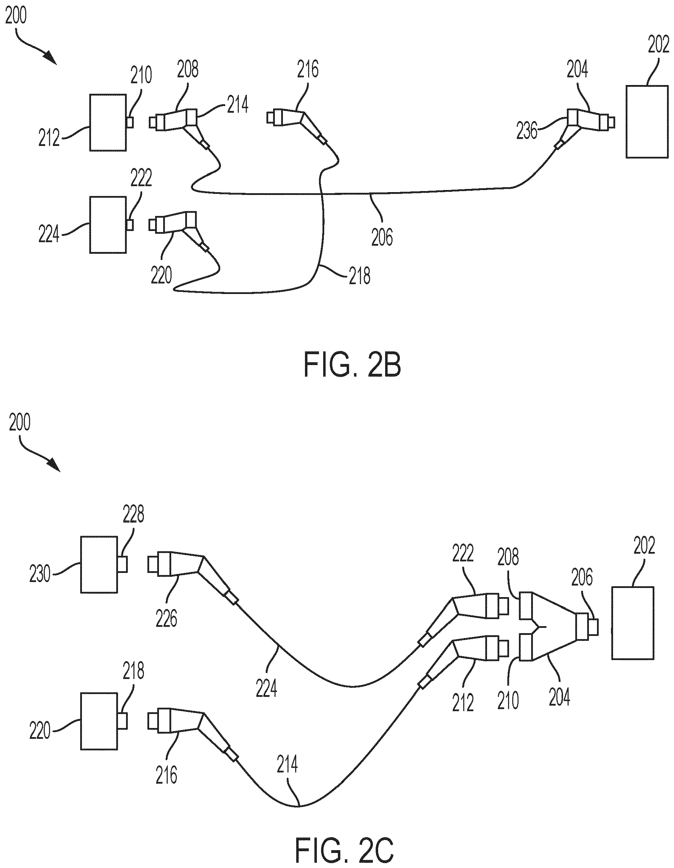

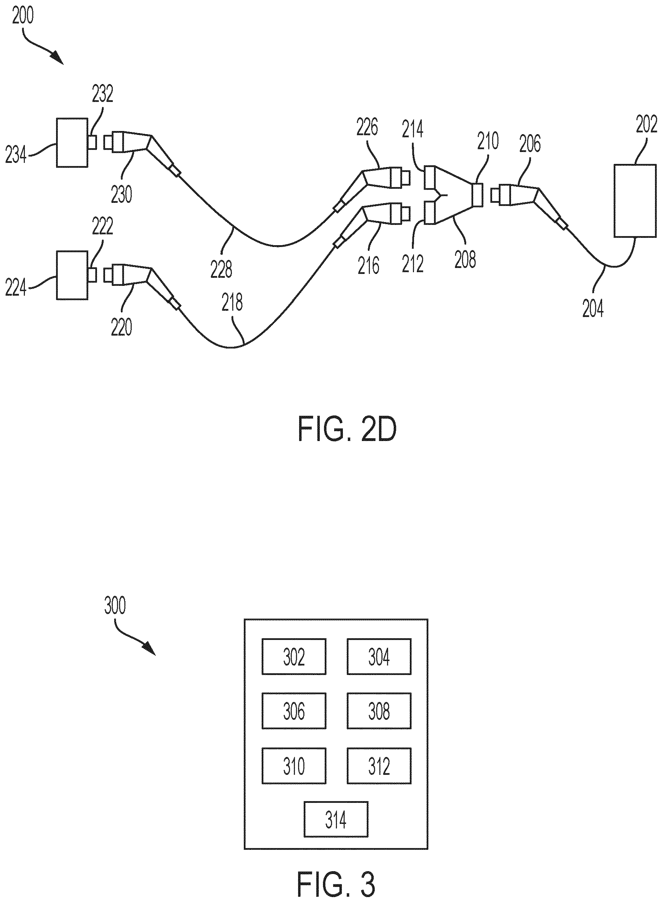

The one or more input terminals 102 or the one or more output terminals 104 include a cover arrangement 108. The cover arrangement 108 may be detachably attached to an end portion of the terminals (102,104). The cover arrangement 108 may have engagement pins to tightly couple with the hollow end portions of the terminals (102,104). The cover arrangement 108 includes an automatic locking mechanism to lock or unlock the cover arrangement 108 with the terminals (102,104). The automatic locking mechanism detects engagement of the one or more input terminals 102 or the one or more output terminals 104 with the one or more power receivers and/or the one or more power sources in order to maintain the cover arrangement 108 in locking mode. The cover arrangement 108 protects the one or more input terminals 102 or the one or more output terminals 104 from external factors such as dirt or liquid. The cover arrangement 108 may be formed of a plastic, a polymer, or any durable material. The cover arrangement 108 may be a cap or a lid. The cover arrangement 108 may be coupled with an additional switch to lock or unlock the cover arrangement 108 with the terminals (102,104).FIG. 2(A), FIG. 2(B), FIG. 2(C), and FIG. 2(D) illustrates different configurations of one or more input terminals and output terminals of an apparatus. A switch (not shown here) may be placed in between the one or more input terminals and the one or more output terminals or may be a part of the one or more input terminals or one or more output terminals.

FIG. 2(A) illustrates a first configuration 200 of an apparatus. In the first configuration 200, the apparatus is a first cable 204. A first end of the first cable 204 is a first input terminal directly connected to a power source 202. A first output terminal is a first plug 206 (male connector), connected with a second end of the first cable 204. Alternatively, the apparatus comprises a first cable 204 connected with the first plug 206. The first plug 206 connects to a first socket 208 (female connector) of a first power receiver 210, thereby enabling the first power receiver 210 to be charged and/or discharged. The second output terminal is a second socket 212 (female connector) arranged on the first plug 206 to receive a second plug 214 (male connector) of a second cable 216. The other end of the second cable 216 comprises a third plug 218 to connect a second power receiver 222 through a third socket 220, thereby enabling the second power receiver 222 to be charged and/or discharged. The third plug 218 comprises a third socket 223 (female connector) arranged on the third plug 218 to receive a another plug (male connector) of another cable. For example, the third socket 223 may be configured to operate in a manner similar to the second socket 212, e.g., when the second cable 216 is connected to the first cable 204, thereby enabling a further power receiver (not shown) to be charged and/or discharged. A similar configuration is seen in FIGS. 2B-2D (although not shown in FIG. 2C and 2D).

The first cable 204 comprises a handle. The first output terminal 206 and the second output terminal 212 are arranged on the handle. The first output terminal 206 is arranged on a front portion of the handle, and the second output terminal 212 is arranged on a rear portion of the handle. The handle provides a sufficient area in the proximity of the rear portion, that allows the user to easily grip and plug the front portion (the first output terminal 206) into the first power receiver 210. The handle is made of plastic, polymer, rubber or any other durable and electrically insulated material. Similarly, the rear portion (the second output terminal 212) of the handle receives a second plug, a cable, or a combination of both to connect with the second power receiver 222. The present invention allows the user to attach an additional plug to existing cables for carrying out the simultaneous charging of the first and second power receivers (210, and 222). In some examples, the overall package of the handle is substantially similar to a conventional handle of a charging cable have only a first output terminal. As a result, the cost of the apparatus 200 may be reduced.

FIG. 2(B) illustrates a second configuration 200 of an apparatus. In the second configuration 200, the apparatus is a first cable 206. A first plug 204 of the first cable 206 is a first input terminal connected to a power source 202. A first output terminal is a second plug 208 (male connector). The first plug 204 is connected to the second plug 208 through the first cable 206. Alternatively, the apparatus comprises a first plug 204 connected to a second plug 208 through a cable 206. The second plug 208 connects to a first socket 210 (female connector) of a first power receiver 212. The second output terminal is a second socket 214 (female connector) arranged on the second plug 208 to receive a third plug 216 (male connector) of a second cable 218. The other end of the second cable 218 comprises a fourth plug 220 to connect a second power receiver 224 through a third socket 222. In some examples, plug 220 may be configured in a manner similar to plug 206 and/or 218 show in FIG. 2A. In the example shown in FIG. 2B, plug 204 comprises an output terminal 236 configured to receive a lug of another cable, e.g., in a similar manner to the second socket 214 of the second plug 208.

The first cable 206 comprises a handle. The first output terminal 208, and the second output terminal 214 are arranged on the handle. The first output terminal 208 is arranged on a front portion of the handle, and the second output terminal 214 is arranged on a rear portion of the handle. The handle provides a sufficient area in the proximity of the rear portion, that allows the user to easily grip and plug the front portion (the first output terminal 208) into the first power receiver 212. Similarly, the rear portion (the second output terminal 214) of the handle receives a second plug, a cable, or a combination of both to connect with the second power receiver 224. The handle is made of plastic, polymer, rubber, or any other durable and electrically insulated material. The present invention allows the user to attach an additional plug to existing cables for carrying out the simultaneous charging of the first and second power receivers (212, and 224), as well as simultaneously charging the first power receiver 212 and discharging the second power receiver 224. As a result, reducing the cost of the apparatus 200.

FIG. 2(C) illustrates a third configuration 200 of an apparatus. In the third configuration 200, the apparatus is a first connector 204. The first connector 204 comprises a first plug 206, a first socket 208, and a second socket 210. The first plug 206 is a first input terminal connected to a power source 202. The first plug 206 eliminates the use of the cable for connecting the power source 202, decreasing the overall cost. The first socket 208 is a first output terminal. The second socket 210 is the second output terminal. The first socket 210 is connected to a first end of a first cable 214 through a first plug 212. A second end of the first cable 214 is connected to a second plug 216. The second plug 216 is connected to a first power receiver 220 through a third socket 218. The first socket 208 is further connected to a first end of a second cable 224 through a third plug 222. A second end of the second cable 224 is connected to a fourth plug 226. The fourth plug 226 is connected to a second power receiver 230 through a fourth socket 228.

The first connector 204 comprises a handle. The first output terminal 208 is the first socket and the second output terminal 210 is the second socket. The first connector 204 is a Y-shape connector with the first output terminal 208 and the second output terminal 210 arranged on a front portion of the handle and a first input terminal 206 arranged on the rear portion of the handle. The handle provides a sufficient area that allows the user to easily grip and plug the front portion of the connector 204 (the first output terminal 208 and the second output terminal 210) into the first and second power receivers (220, and 230) via a plug, a cable, or a combination of both. The handle is made of plastic, polymer, rubber, or any other durable and electrically insulated material. The present invention allows the user to attach an additional connector 204 to existing cables for carrying out the simultaneous charging of the first and second power receivers (220, and 230). As a result, reducing the cost of the apparatus 200. In some examples, one or more of plugs 212, 216, 222 and 226 may be configured in a manner similar to plug 206 and/or 218 show in FIG. 2A.

FIG. 2(D) illustrates a fourth configuration 200 of an apparatus. In the fourth configuration, the apparatus is a first connector 208. A first plug 206 is a first input terminal connected to a power source 202 through a first cable 204. The first connector 208 further comprises a first socket 210, a second socket 212 and a third socket 214. The first socket 210 of the first connector 208 is connected to the first cable 204 through the first plug 206. The second socket 212 is a first output terminal connected to a first end of a second cable 218 through a second plug 216. A second end of the second cable 218 is connected to a third plug 220. The third plug 220 is connected to a first power receiver 224 through a fourth socket 222. The third socket 214 is a second output terminal connected to a first end of a third cable 228 through a fourth plug 226. A second end of the third cable 228 is connected to a fifth plug 230. The fifth plug 230 is connected to a second power receiver 234 through a fifth socket 232.

The first connector 208 comprises a handle. The first output terminal 212 is the second socket and the second output terminal 214 is the first socket. The first connector 208 is a Y-shape connector with the first output terminal 212 and the second output terminal 214 arranged on a front portion of the handle and the first socket 210 arranged on a rear portion of the handle. The handle provides a sufficient area that allows the user to easily grip and plug the front portion of the connector 208 (the first output terminal 212 and the second output terminal 214) into the first and second power receivers (224, and 234) via a plug, a cable, or a combination of both. The handle is made of plastic, polymer, rubber, or any other durable and electrically insulated material. The present invention allows the user to attach an additional connector 208 to existing cables for carrying out the simultaneous charging of the first and second power receivers (224, and 234). As a result, reducing the cost of the apparatus 200. In some examples, one or more of plugs 206, 216, 220, 226 and 230 may be configured in a manner similar to plug 206 and/or 218 show in FIG. 2A.

FIG. 3 illustrates a block diagram of a system 300. The system 300 comprises one or more input terminals 302, one or more user interface modules 304, a communication module 306, a processing module 308, a memory module 310, a switch 312, and one or more output terminals 314.

The one or more input terminals 302 receive input from one or more power sources. The one or more input terminals 302 may be directly connected to the one or more power sources. Alternatively, the one or more input terminals 302 may be connected to the one or more power sources through a cable, a plug, a socket, a connector, or a combination thereof. The cable has sufficient length to connect the one or more input terminals 302 to the one or more power sources.

The input is a power signal. The one or more power sources may be a vehicle or a building.

The one or more input terminals 302 or the one or more output terminals 314 may include a proximity pilot (PP) circuit to determine the connection status of the one or more power receivers. The connection status determination includes monitoring readiness of the one or more power receivers. The PP circuit may perform other functions but is not limited to sensing various parameters such as temperature, humidity, light, acceleration, and electrical resistance in the apparatus (shown in FIG. 1). Alternatively, the system 300 may include a sensor module (not shown) to determine the connection status of the one or more power receivers. The sensor module may be a part of the one or more power receivers, or the functionality of the sensor module is performed using one or more sub-modules of the one or more power receivers.

The one or more user interface modules 304 may comprise at least one touch screen, at least one button, at least one infotainment system or a combination thereof. The one or more user interface modules 304 may be located at one or more power sources or one or more power receivers. Alternatively, the one or more user interface modules 304 may be located remotely to the system 300. The one or more user interface modules 304 allow the user to select desired parameters for the overall operations. The desired parameters may include but are not limited to charging time, charging priority of the one or more power receivers, charging mode or a combination thereof. In one example, the user interface modules 304 allows the user to define the one or more predefined logics.

The one or more user interface modules 304 may further include but is not limited to a tactile sensor, a light-emitting diode (LED), a loudspeaker or a combination thereof to provide feedback to the user. The feedback may include an SMS, tactile feedback, an LED indication, an audio message, or a combination thereof.

The system 300 comprises the communication module 306 to enable communication between the one or more user interface modules 304 and the processing module 308. The one or more user interface modules 304 transmits the user selection to the processing module 308 using at least one of a wired or a wireless communication protocol. The communication module 306 is responsible for enabling communication between the one or more power sources and the one or more power receivers. The at least one wired communication protocol may include but is not limited to an ethernet (IEEE 802.3), a power line communication (PLC), a control pilot (charging point 114) such as a local interconnect network (LIN), a controller area network (CAN), a media-oriented system transport (MOST), or a flexRay. The at least one wireless communication protocol may include but is not limited to radio frequency (RF), infrared (IrDA), Bluetooth, Zigbee (and other variants of the IEEE 802.15 protocol), a wireless fidelity (WiFi) or IEEE 802.11 (any variation), IEEE 802.16 (WiMAX or any other variation), direct sequence spread spectrum (DSSS), frequency hopping spread spectrum (FHSS), global system for mobile communication (GSM), general packet radio service (GPRS), enhanced data rates for GSM Evolution (EDGE), long term evolution (LTE), cellular protocols (2G, 2.5G, 2.75G, 3G, 4G or 5G), near field communication (NFC), satellite data communication protocols, or any other protocols for wireless communication, such as Modbus, EEBUS, Smart Energy Profile 2.0 (SEP2), and/or any other appropriate protocol, e.g., released under the Institute of Electrical and Electronics Engineers (IEEE) and/or the Smart Grid Interoperability Panel (SGIP).

The one or more power sources and the one or more power receivers exchange the one or more control signals according to a Combined Charging System (CCS) protocol. The CCS protocol supports a fast-charging method for charging the one or more power receivers, by delivering high-voltage current via an apparatus for charging one or more power receivers (shown in FIG.1, and FIG. 1(A)), e.g., an apparatus fulfilling or being derived from a SAE J1772/IEC 62196 Type 1 or IEC 62196 Type 2 connector specifications. The CCS may allow AC and DC charging. The apparatus described above or below may additionally or as an alternative also support other protocols such as CHAdeMO (CHArge de Move) and/or GB/T (Guobiao), e.g., according to GB/T 20234.3-2011 standard. The one or more power sources utilize a protective earth (PE) (also known as a ground) to safely direct a fault current into the ground. The same protective earth is used for the one or more power receivers. Additionally or alternatively, the apparatus described above supports North American Charging Standard (NACS), standardized under SAE J3400.

The processing module 308 may comprise at least one or more processors to carry out the overall operation of the system 300. The processing module 308 is capable of executing software instructions or algorithms to implement functional aspects of the present disclosure. The processing module 308 can be any commercially available processor or a cloud system. The processing module 308 can also be implemented as a Digital Signal Processor (DSP), a controller, a microcontroller, a designated System on Chip (SoC), an integrated circuit implemented with a Field Programmable Gate Array (FPGA), an Application Specific Integrated Circuit (ASIC), or a combination thereof. The processing module 308 can be implemented using a co-processor for complex computational tasks.

The processing module 308 may be located at one or more power sources, one or more power receivers, one or more input terminals 302 or one or more output terminals 314. The processing module 308 receives the user selection to define one or more predefined logics for determining a target state of the one or more power receivers. The processing module 308 determines a current state of the one or more power receivers using the sensor module (not shown). The sensor module determines the current state of the one or more power receivers using a state of charge of the one or more power receivers, a state of health of the one or more power receivers, a charging rate or a combination thereof. The processing module 308 compares the target state with the current state of the one or more power receivers. The processing module 308 generates one or more control signals based on the comparison. The sensor module may include but is not limited to a voltage sensor, a current sensor, a temperature sensor, or a combination thereof.

The memory module 310 may comprise at least one or more memories to store the one or more predefined logics. The one or more predefined logics is based on time, state of charge (SOC), state of health, priority, load, charging mode or a combination thereof.

The memory module 310 is coupled with the processing module 308. The memory module 310 may include any of the volatile memory elements (for example, random access memory, such as DRAM, SRAM, SDRAM, etc.), non-volatile memory elements (for example, ROM, hard drive, etc.), other storage media or combinations thereof. The memory module 310 may have a distributed architecture, where various components are situated remotely from one another but can be accessed using the processing module 308. The software in the memory module 310 can include one or more software programs, and machine learning algorithms, each of which includes an ordered listing of executable instructions for implementing logical functions. Further, the processing module 308 can be implemented using a cloud architecture. The processing module 308 can interact with one or more components of the one or more power receivers for efficient charging.

The switch 312 is communicatively coupled with the processing module 308 to receive the one or more predefined logics. The switch controls the charging of the one or more power sources based on the one or more predefined logics and the input. The switch 312 is an electronic switch responsible for controlling the charging to the one or more power receivers.

The switch 312 may be placed in between the one or more input terminals 302 and the one or more output terminals 314. Alternatively, the switch 312 may be a part of the one or more input terminals 302 or one or more output terminals 314. The switch 312 may comprise one or more sub-units for controlling the charging between one or more input terminals 302, the one or more output terminals 314 or one or more power sources. The switch 312 may include a current-limiting circuit to selectively limit the flow of the current through the one or more output terminals 314 in the apparatus for charging one or more power receivers. Alternatively, the switch 312 may be connected to the current-limiting circuit using at least one of a wired or wireless communication protocol. In one example, the current-limiting circuit may be a part of the one or more input terminals 302, the one or more output terminals 314.

The one or more output terminals 314 transfer the received input from the one or more power sources to one or more power receivers (not shown). The one or more output terminals 314 may be directly connected to the one or more power receivers. Alternatively, the one or more output terminals 314 may be connected to the one or more power receivers through a cable, a plug, a socket, a connector, or a combination thereof. The cable has sufficient length to connect the one or more output terminals 314 to the one or more power receivers.

In one example, the one or more input terminals 302 and the one or more output terminals 314 may be integrated into a single structure. The one or more input terminals 302 and the one or more output terminals 314 are cable, a plug, a socket, a connector, or a combination thereof.

The terms "the one or more input terminals 302" or "the one or more output terminals 314" are interchangeable. For example, the interchanging of the terminal(s) can be realized in the case of bidirectional power transfer (BPT). The one or more input terminals 302 may act or serve output terminals when multiple power receivers are sequentially connected. Similarly, the one or more output terminals 314 may act or serve as input terminals for the sequentially connected power receivers.

The one or more input terminals 302 or the one or more output terminals 314 include a cover arrangement. The cover arrangement may be detachably attached to an end portion of the terminals (302, 314). The cover arrangement may have engagement pins to tightly couple with the hollow end portions of the terminals (302, 314). The cover arrangement includes an automatic locking mechanism to lock or unlock the cover arrangement with the terminals (302, 314). The automatic locking mechanism detects engagement of the one or more input terminals 302 or the one or more output terminals 314 with the one or more power receivers and/or the one or more power sources in order to maintain the cover arrangement in locking mode. The cover arrangement protects the one or more input terminals 302 or the one or more output terminals 314 from external factors such as dirt or liquid. The cover arrangement may be formed of plastic or any durable material. The cover arrangement may be a cap or a lid. The cover arrangement may be coupled with an additional switch to lock or unlock the cover arrangement with the terminals (302, 314).

The one or more input terminals 302 or the one or more output terminals 314 may be a cable, a connector, or a combination thereof.

For example, during operation, the user selects desired parameters from one or more user interface modules 314. The user may select a desired charging time e.g., 30 minutes to fully charge one or more power receivers. Further, the user may select a charging mode from a fast-charging mode, a slow-charging mode, or a bidirectional power transfer (BPT) mode. The user may also select the charging priority when multiple power receivers are sequentially connected. The one or more user interface modules 314 is communicatively coupled to the one or more power sources. The one or more power sources are connected to the one or more input terminals 302. The one or more input terminals 302 determine the connection status of one or more power receivers with one or more power sources using the PP circuit. The one or more input terminals 302 transmits a feedback message to the one or more user interface modules 304 to indicate a loose connection of the one or more power receivers. If the one or more power receivers are correctly plugged into the one or more power sources, the processing module 308 determines the current state of the one or more power receivers using the sensor module (not shown here). The sensor module determines the current state of the one or more power receivers using a state of charge of the one or more power receivers, a state of health of the one or more power receivers, a power transfer rate, or a combination thereof.

The processing module 308 receives the user selection from the one or more user interface modules 304 to define the one or more predefined logics. The processing module 308 processes the one or more predefined logics to determine a target state of the one or more power receivers. The processing module 308 compares the target state with the current state of the one or more power receivers to generate one or more control signals. The switch 312 is communicatively coupled to the processing module 308 to receive the one or more control signals. The switch 312 controls the charging of the one or more power receivers based on the received input and the one or more control signals.

The switch 312 may receive a signal from the one or more power receivers to indicate completion of the charging or charging time. The switch 312 further notifies the processing module 308 using the received signal. The processing module 308 generates a feedback signal based on the received signal. The processing module 308 transmits the feedback signal to one or more user interface modules 304 to provide the feedback to the user.

In another example, the user may abort the ongoing charging or charging operation at any moment before the completion of the charging or charging time. The one or more user interface modules 304 transmits an abort signal to the processing module 308. The processing module 308 processes the abort signal and generates a stop signal. The processing module 308 transmits the stop signal to the switch 312 to terminate the ongoing charging operation.

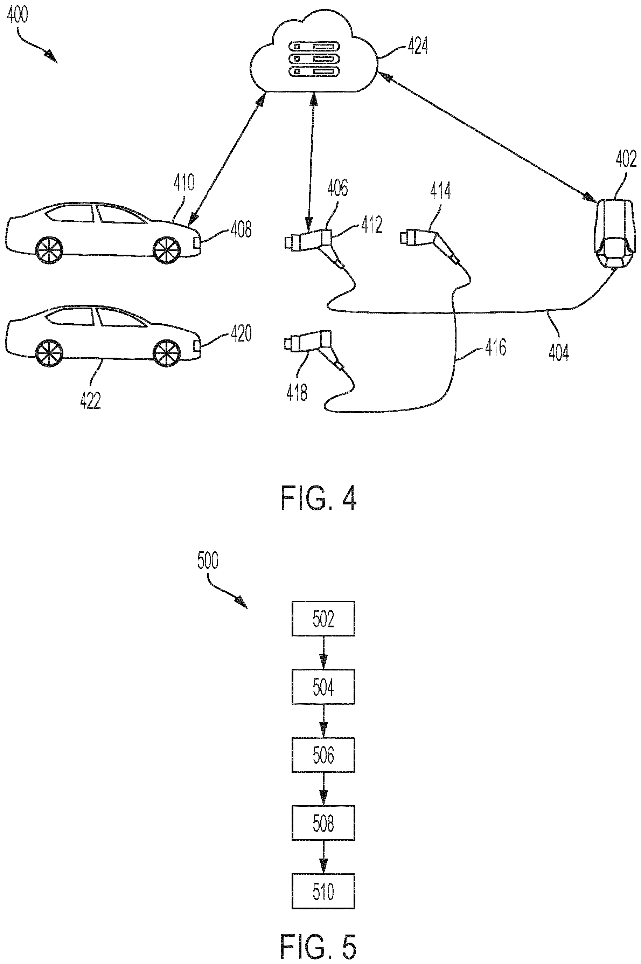

FIG. 4 illustrates a block diagram of a system 400. The system 400 comprises a power source 402, an apparatus 404, a first electric vehicle 410, a second electric vehicle 422, and a cloud server 424.

The power source 402 is a charging station. Alternatively, the power source 402 may be a vehicle or a building.

The apparatus 404 receives input from the power source 402. The apparatus 404 acts as an intermediate to the power source 402 and the first and second electric vehicles 410 and 422. The apparatus 404 transfers the received input to the first electric vehicle 410. The received input is a power signal.

The apparatus 404 is a first cable. Alternatively, the apparatus 404 is a plug, a socket, a connector, or a combination thereof. A first end of the first cable 404 is an input terminal directly connected to a power source 402. The first cable 404 has sufficient length to connect to the power source 402. A first output terminal is a first plug 406 (male connector), connected with a second end of the first cable 404. The first plug 406 connects to a first socket 408 (female connector) of the first electric vehicle 410. A second output terminal is a second socket 412 (female connector) arranged on the first plug 406 to receive a second plug 414 (male connector) of a second cable 416. The other end of the second cable 416 comprises a third plug 418 to connect the second electric vehicle 422 through a third socket 420.

The system 400 includes a user interface module (not shown). The user interface module may comprise at least one touch screen, at least one button, at least one infotainment system or a combination thereof. The user interface module may be located at the power source 402, or the first and second electric vehicles 410 and 422. Alternatively, the user interface module may be located remotely to the system 400. The user interface module allows the user to select desired parameters for the overall operations. The desired parameters may include but are not limited to charging time, charging priority of the first and second electric vehicles 410 and 422, charging mode or a combination thereof. The user interface module is communicatively coupled with the cloud server 424 using a communication module (not shown here). The user interface module transmits the desired parameters to the cloud server 424. The cloud server 424 is located remotely from the system 400.

The user interface module may further include but is not limited to a tactile sensor, a light-emitting diode (LED), a loudspeaker or a combination thereof to provide feedback to the user. The feedback may include an SMS, tactile feedback, an LED indication, an audio message, or a combination thereof.

The cloud server 424 includes a processing module, a memory module, and a communication module (not shown here). The cloud server 424 receives the desired parameters using the communication module. The communication module supports at least one of a wired or wireless communication protocol. The communication module is responsible for enabling communication between the power source 402 and the first and second electric vehicles 410 and 422. The at least one wired communication protocol may include but is not limited to an ethernet (IEEE 802.3), a power line communication (PLC), a control pilot (CP) such as a local interconnect network (LIN), a controller area network (CAN), a media-oriented system transport (MOST), or a flexRay. The at least one wireless communication protocol may include but is not limited to radio frequency (RF), infrared (IrDA), Bluetooth, Zigbee (and other variants of the IEEE 802.15 protocol), a wireless fidelity (WiFi) or IEEE 802.11 (any variation), IEEE 802.16 (WiMAX or any other variation), direct sequence spread spectrum (DSSS), frequency hopping spread spectrum (FHSS), global system for mobile communication (GSM), general packet radio service (GPRS), enhanced data rates for GSM Evolution (EDGE), long term evolution (LTE), cellular protocols (2G, 2.5G, 2.75G, 3G, 4G or 5G), near field communication (NFC), satellite data communication protocols, or any other protocols for wireless communication, such as Modbus, EEBUS, Smart Energy Profile 2.0 (SEP2), and/or any other appropriate protocol, e.g., released under the Institute of Electrical and Electronics Engineers (IEEE) and/or the Smart Grid Interoperability Panel (SGIP).

The processing module may comprise at least one or more processors to carry out the overall operation of the system 400. The processing module is capable of executing software instructions or algorithms to implement functional aspects of the present disclosure. The processing module can be any commercially available processor or a cloud system. The processing module can also be implemented as a Digital Signal Processor (DSP), a controller, a microcontroller, a designated System on Chip (SoC), an integrated circuit implemented with a Field Programmable Gate Array (FPGA), an Application Specific Integrated Circuit (ASIC), or a combination thereof. The processing module can be implemented using a co-processor for complex computational tasks.

The processing module receives the user selection or desired parameters to define the one or more predefined logics for determining a target state of the one or more electric vehicles 406. Alternatively, the processing module may fetch the one or more predefined logics priorly stored in the processing module. Alternatively, the processing module may receive updated user selection or desired parameters at any time. The processing module modifies the one or more predefined logics based on the updated user selection or desired parameters.

The processing module determines a current state of the first and second electric vehicles 410 and 422 using the sensor module (not shown). The sensor module determines the current state of the first and second electric vehicles 410 and 422 using a state of charge of the first and second electric vehicles 410 and 422, a state of health of the first and second electric vehicles 410 and 422, a charging rate or a combination thereof. The processing module compares the target state with the current state of the first and second electric vehicles 410 and 422. The processing module generates one or more control signals based on the comparison. The sensor module may include but is not limited to a voltage sensor, a current sensor, a temperature sensor, or a combination thereof.

The memory module may comprise at least one or more memories to store the one or more predefined logics. The one or more predefined logics is based on time, state of charge (SOC), state of health, priority, load, charging mode or a combination thereof.

The memory module is coupled with the processing module. The memory module may include any of the volatile memory elements (for example, random access memory, such as DRAM, SRAM, SDRAM, etc.), non-volatile memory elements (for example, ROM, hard drive, etc.), other storage media or combinations thereof. The memory module may have a distributed architecture, where various components are situated remotely from one another but can be accessed using the processing module. The software in the memory module can include one or more software programs, and machine learning algorithms, each of which includes an ordered listing of executable instructions for implementing logical functions. Further, the processing module can be implemented using a cloud architecture. The processing module can interact with one or more components of the first and second electric vehicles 410 and 422 for efficient charging.

The apparatus 404 receives the one or more predefined logics from the cloud server 424. The apparatus 404 includes a switch (not shown) to control charging through the first output terminal 406 and the second output terminal 412 based on one or more predefined logics. The switch is an electronic switch responsible for controlling the charging of the first and second electric vehicles 410 and 422.

The switch may be placed in between the input terminal (not shown here) and the first or second output terminals (406, and 412). Alternatively, the switch may be a part of the input terminal or first or second output terminals (406, and 412). The switch may comprise one or more sub-units for controlling the charging between the input terminal or first or second output terminals (406, and 412). The switch may include a current-limiting circuit to selectively limit the flow of the current through first or second output terminals (406, or 412) in the apparatus 400 for charging the first and second electric vehicles 410 and 422. Alternatively, the switch may be connected to the current-limiting circuit using at least one of a wired or wireless communication protocol. In one example, the current-limiting circuit may be a part of the input terminal or first or second output terminals (406, or 412).

The power source 402 and the first and second electric vehicles 410 and 422 exchange the one or more control signals according to a Combined Charging System (CCS) protocol. The CCS protocol supports a fast-charging method for charging the first and second electric vehicles 410 and 422, by delivering high-voltage current via the apparatus 404 for charging the first and second electric vehicles 410 and 422 (shown in FIG.1 and FIG. 1(A), e.g., the apparatus 404 fulfilling or being derived from a SAE J1772/IEC 62196 Type 1 or IEC 62196 Type 2 connector specifications. The CCS may allow AC and DC charging. The apparatus 404 described above or below may additionally or as an alternative also support other protocols such as CHAdeMO (CHArge de Move) and/or GB/T (Guobiao), e.g., according to GB/T 20234.3-2011 standard. The power source 402 utilizes a protective earth (PE) (also known as a ground) to safely direct a fault current into the ground. The same protective earth is used for the first and second electric vehicles 410 and 422. Additionally or alternatively, the apparatus described above supports North American Charging Standard (NACS), standardized under SAE J3400.

The first output terminal 406 and the second output terminal 412 transfer the received input from the power source 402 to the first and second electric vehicles 410 and 422. The first output terminal 406 and the second output terminal 412 may be connected to the first and second electric vehicles 410 and 422 through a cable, a plug, a socket, a connector, or a combination thereof. The cable has sufficient length for connecting the first output terminal 406 to the first and second electric vehicles 410 and 422.

The terms "the input terminal" or "the first output terminal 406 and the second output terminal 412" are interchangeable. For example, the interchanging of the terminal(s) can be realized in the case of bidirectional power transfer (BPT). The input terminal may act or serve as the output terminal when multiple electric vehicles are sequentially connected. Similarly, the first output terminal 406 and the second output terminal 412 may act or serve as input terminals for the sequentially connected electric vehicles.

The first cable 404 comprises a handle. The first output terminal 406 and the second output terminal 412 are arranged on the handle. The first output terminal 406 is arranged on a front portion of the handle, and the second output terminal 412 is arranged on a rear portion of the handle. The handle provides a sufficient area in the proximity of the rear portion, that allows the user to easily grip and plug the front portion (the first output terminal 406) into the first electric vehicle 410. Similarly, the rear portion (the second output terminal 412) of the handle receives a second plug, a cable, or a combination of both to connect with the second electric vehicle 422. The present invention allows the user to attach an additional plug to existing cables for carrying out the simultaneous charging of the first and second electric vehicles (410, and 422). As a result, reducing the cost of the apparatus.

The apparatus 404 comprises a cover arrangement to cover the first input terminal, the first output terminal 406, or the second output terminal 412.

The cover arrangement may be detachably attached to an end portion of the terminals (406, 412). The cover arrangement may have engagement pins to tightly couple with the hollow end portions of the terminals (406, 412). The cover arrangement includes an automatic locking mechanism to lock or unlock the cover arrangement with the terminals (406, 412). The automatic locking mechanism detects the engagement of the input terminal, the first output terminal 406, or the second output terminal 412 with the first and second electric vehicles 410 and 422 and/or the power source 402 in order to maintain the cover arrangement in locking mode. The cover arrangement protects the input terminal, the first output terminal 406, or the second output terminal 412 from external factors such as dirt or liquid. The cover arrangement may be formed of plastic or any durable material. The cover arrangement may be a cap or a lid. The cover arrangement may be coupled with an additional switch to lock or unlock the cover arrangement with the terminals (406, 412).

The input terminal or the first and second output terminals (406, 412) may be a cable, a connector, or a combination thereof.

For example, during operation, the user selects desired parameters from the user interface module. The user may select a desired charging time e.g., 30 minutes to fully charge the first and second electric vehicles 410 and 422. Further, the user may select a charging mode from a fast-charging mode, a slow-charging mode, or a bidirectional power transfer (BPT) mode. The user may also select the charging priority when multiple electric vehicles are sequentially connected. The user interface module is communicatively coupled to the power source 402. The power source 402 is connected to the input terminal of the apparatus 404. The input terminal of the apparatus 404 determines the connection status of the first and second electric vehicles 410 and 422 with the power source using the PP circuit. The input terminal transmits a feedback message to the user interface module to indicate a loose connection between the first and second electric vehicles 410 and 422. If the first and second electric vehicles 410 and 422 are correctly plugged into the power source, the processing module determines the current state of the first and second electric vehicles 410 and 422 using the sensor module (not shown here). The sensor module determines the current state of the first and second electric vehicles 410 and 422 using a state of charge of the first and second electric vehicles 410 and 422, a state of health of the first and second electric vehicles 410 and 422, a charging rate or a combination thereof.

The processing module receives the user selection from the user interface module to define the one or more predefined logics. The processing module processes the one or more predefined logics to determine a target state of the first and second electric vehicles 410 and 422. The processing module compares the target state with the current state of the first and second electric vehicles 410 and 422 to generate one or more control signals. The switch is communicatively coupled to the processing module to receive the one or more control signals. The switch controls the charging of the first and second electric vehicles 410 and 422 based on the received input and the one or more control signals.

The switch may receive a signal from the first and second electric vehicles 410 and 422 the charging or charging time completion. The switch further notifies the processing module using the received signal. The processing module generates a feedback signal based on the received signal. The processing module transmits the feedback signal to the user interface module to provide the feedback to the user.

In another example, the user may abort the ongoing charging or charging operation at any moment before the completion of the charging or charging time. The user interface module transmits an abort signal to the processing module. The processing module processes the abort signal and generates a stop signal. The processing module transmits the stop signal to the switch to terminate the ongoing charging operation.

FIG. 5 illustrates flowchart 500 for charging multiple electric vehicles. The method 500 comprises the following steps: (a) determining (502) a connection status of one or more electric vehicles with a power source; (b) determining (504) a current state of the one or more electric vehicles; (c) processing (506) one or more predefined logics to determine a target state of the one or more electric vehicles; (d) comparing (508) the target state with the current state of the one or more electric vehicles; and (e) generating (510) one or more control signals based on the comparison.

The connection status of the one or more electric vehicles is determined using a proximity pilot circuit or a sensor module. In one example, the proximity pilot circuit is a part of the sensor module. The proximity pilot circuit or the sensor module monitors the readiness of one or more electric vehicles. The connection status shows whether one or more electric vehicles are correctly plugged in or have a loose connection. A feedback signal is sent back to one or more user interface modules in the event of a loose connection for providing feedback to a user. The information about the connection status is exchanged via at least one wired or wireless communication protocol.

The sensor module determines the current state of the one or more electric vehicles. The current state includes state of charge (SOC), state of health, charging rate or a combination thereof.

The processing module receives a user selection provided by the one or more user interface modules. The user selection includes charging time, charging priority of the one or more electric vehicles, charging mode or a combination thereof.

In a first example, the user may select a charging for one or more electric vehicles. The user may select thirty minutes to charge a first electric vehicle and one hour for charging a second electric vehicle.

In a second example, the user may select a charging priority in case multiple electric vehicles are connected sequentially. For example, the user may select a high priority for a first electric vehicle and a low priority for a second electric vehicle.

In a third example, the user may select different charging modes for one or more electric vehicles. For example, the user may select a fast-charging mode for a first electric vehicle and a slow-charging mode for a second electric vehicle. The user may also select a bidirectional charging mode for one or more electric vehicles.

The processing module defines one or more predefined logics based on the above user selection. The processing module processes the one or more predefined logics to determine a target state of the one or more electric vehicles. Further, the processing module compares the target state with the current state of the one or more electric vehicles to generate one or more control signals. The one or more signals are transmitted to a switch for controlling the charging.

In one example, the processing module fetches default one or more predefined logics stored in a memory module, if the user has not made any selection. Alternatively, the processing module automatically defines one or more predefined logics based on an input from the sensor module, if no signal or input is received from the user interface. Additionally, the processing module fetches or automatically defines one or more predefined logics, if no signal or input is received from the user interface, after a lapse of a predetermined time from the determination of connection status or readiness of the one or more power receivers.

The user interface modules provide one or more feedbacks based on the connection status, the current state, the target state, the one or more predefined logics, or a combination thereof.

The above-stated descriptions are merely example implementations of this application but are not intended to limit the protection scope of this application. A person with ordinary skills in the art may recognize substantially equivalent structures or substantially equivalent acts to achieve the same results in the same manner or a dissimilar manner; the exemplary embodiment should not be interpreted as limiting the disclosure to one embodiment.

While aspects of the present disclosure have been described in detail with reference to the illustrated embodiments, those skilled in the art will recognize that many modifications may be made thereto without departing from the scope of the present disclosure. The present disclosure is not limited to the precise construction and compositions disclosed herein; any and all modifications, changes, and variations apparent from the foregoing descriptions are within the spirit and scope of the disclosure as defined in the appended claims. Moreover, the present concepts expressly include any and all combinations and sub combinations of the preceding elements and features.

The description is provided for clarification purposes and is not limiting. Words and phrases are to be accorded their ordinary, plain meaning unless indicated otherwise.

## Claims

1. An apparatus for charging multiple electric vehicles comprising:
an input terminal connectable to a power source;
a first output terminal connectable to an input terminal of a first electric vehicle;
a second output terminal connectable to an input terminal of a second electric vehicle; and
a switch to control power transfer through each of the first output terminal and the second output terminal based on one or more predefined logics.

2. The apparatus of claim 1, wherein the apparatus is a cable, a connector, or a combination thereof.

3. The apparatus of claim 2, wherein the cable comprises a handle, and the first and second output terminals are arranged on the handle.

4. The apparatus of claim 1, wherein the apparatus comprises a cover arrangement to cover the first input terminal, the first output terminal, or the second output terminal.

5. The apparatus of claim 4, wherein the cover arrangement includes an automatic locking mechanism.

6. The apparatus of claim 1, wherein the switch is communicatively coupled to a processing module for receiving one or more control signals based on the one or more predefined logics to control the charging.

7. The apparatus of claim 1, wherein the one or more predefined logics is based on time, state of charge (SOC), state of health, priority, load, charging mode or a combination thereof.

8. The apparatus of claim 7, wherein the charging mode includes a bi-directional power transfer (BPT) mode.

9. A method for charging multiple electric vehicles comprising:
determining a connection status of one or more electric vehicles with a power source;
determining a current state of the one or more electric vehicles;
processing one or more predefined logics to determine a target state of the one or more electric vehicles;
comparing the target state with the current state of the one or more electric vehicles; and
generating one or more control signals based on the comparison.

10. The method of claim 9, wherein generating the one or more control signals comprises transmitting the one or more control signals to a switch for controlling the charging.

11. The method of claim 9, wherein the current state includes state of charge (SOC), state of health, charging rate or a combination thereof.

12. The method of claim 9, wherein determining the connection status further comprises monitoring readiness of one or more electric vehicles.

13. The method of claim 9, wherein the method further comprises providing one or more feedback using one or more user interface modules based on the connection status, the current state, the target state, the one or more predefined logics or a combination thereof.

14. The method of claim 9, wherein determining the connection status comprises determining the connection status via at least one of a wired or wireless protocols.

15. A system comprising:
a first electric vehicle;
a second electric vehicle; and
an apparatus configured to charge the first and second electric vehicles comprising:
an input terminal connectable to a power source;
a first output terminal connectable to an input terminal of the first electric vehicle;
a second output terminal connectable to an input terminal of the second electric vehicle; and
a switch to control power transfer through each of the first output terminal and the second output terminal based on one or more predefined logics.
